# EUROPÄISCHE PATENTSCHRIFT

(11) **EP 2 036 435 B1**
(45) Veröffentlichungstag und Bekanntmachung des Hinweises auf die Patenterteilung: **02.05.2012**
(21) Anmeldenummer: 08000193.6
(22) Anmeldetag: 08.01.2008
(51) Int. Cl.: A01N 25/02, A01N 33/12, A01N 43/653, A01N 59/14, A01N 59/22, B27K 3/38, B27K 3/50, B27K 3/52

(54) **Holzschutzmittel**
Wood protection agent
Produit de protection du bois

(30) Priorität: 13.09.2007 DE 102007043717
(43) Veröffentlichungstag der Anmeldung: 18.03.2009
(73) Patentinhaber: Remmers Baustofftechnik GmbH, 49624 Löningen (DE)
(72) Erfinder: Werrelmann, Günter, 49696 Peheim (DE)
(74) Vertreter: Siekmann, Gunnar

(56) Entgegenhaltungen:
- EP-A- 0 347 707
- EP-A- 0 385 076
- EP-A- 0 482 433
- WO-A-2006/031207
- GB-A- 1 453 772

## Beschreibung

Die Erfindung betrifft ein Konservierungsmittel für Holz, dass neben einem oder mehreren ansich bekannten Wirkstoff (EN) eine wirksame Menge wenigstens eines Fixierungshilfsmittels enthält.

Holz, das im Freiland verwendet wird, wie alle Arten von Bauholz und dergleichen, muss nicht nur vor Witterungseinflüssen, sondern auch vor dem Befall von Insekten, Pilzen und anderen Mikroorganismen geschützt werden, um seine Haltbarkeit zu verlängern. Insektizide und fungizide Mittel kommen hierfür zum Einsatz, mit welchen das Holz entweder vorab, d.h. vor dessen Einsatz im Freiland, oder auch danach behandelt wird.

Die DE 196 48 888 A1 beschreibt ein wasserlösliches Holzschutzmittel auf der Basis einer Benzalkoniumhalogenidlösung mit einem Gehalt an einer Triazolverbindung. Ziel war es hier, hochkonzentrierte, wässrige und stabile Triazolformulierungen zur Verfügung zu stellen, welche zur Drucktränk- und Vakuumdruckimprägnierung geeignet sind.

Die EP-A-0 482 433 beschreibt ein wasserlösliches Holzschutzmittel, das aus einer Metallverbindung, einer metall-fixierenden Säure sowie einer komplexbildenden polymeren Stickstoffverbindung besteht. Insbesondere werden Zusammensetzung mit Kupferhydroxycarbonat, Carbonsäuren und in einigen Beispielen mit Propiconazol als fungizidem Wirkstoff beschrieben.

Die WO 2006/031207 A beschreibt ein wässriges Holzschutzmittel, das ein Kupfersalz, ein Amin, eine Carbonsäure, ein quaternäres Ammoniumsalz und ein Borsalz enthält.

In der EP-A-0 347 707 wird eine Methode zur Fixierung von Kupfer/Chrom/Arsen-Verbindungen in Holz durch eine zweite Behandlung des mit Kupfer/Chrom/Arsen-imprägnierten Holzes mit einem Reduktionsmittel, beschrieben. Auch in der EP-A-0 385 076 wird ein Mittel zum Konservieren von Holz beschrieben, das aus einer Triazolverbindung, einem Cyclopropancarboxylat sowie gegebenenfalls einem Fixierungsmittel besteht. Es werden Fixierungsmittel auf der Basis von Ketonen und/oder Polyvinylalkylether beschrieben.

Eine Herbizidzusammensetzung, die Phenoxyfettsäuren oder deren Ester enthält ist in der GB-A-1 453 772 beschrieben.

Entscheidend für die Dauer der Wirksamkeit eines in Holz eingebrachten Wirkstoffes oder mehrerer Wirkstoffe zum Schutz gegen holzzerstörende Pilze, erdbewohnende Mikroorganismen und auch Insekten ist die Fixierung der Wirkstoffe im Holz. Im Holz fixierte Wirkstoffe bedeuten eine wesentlich längere Standdauer der Holzbausubstanz, insbesondere bei der Freibewitterung des behandelten Holzes bzw. bei Holz, das mit Erdreich in Kontakt kommt.

Bei den bekannten Holzschutzmitteln, die durch Vaccum-Druckimprägnierung als wässrige Lösung in Holz eingebracht werden, handelt es sich um Kupfer/Chrom/Arsen- oder Kupfer/Chrom/Borverbindungen, wobei der Wirkstoff Kupfer durch die Reduzierung des sechswertigen Chroms zu dreiwertigem Chrom im Holz angelagert wird. Damit sind die Wirkstoffe Kupfer und Arsen schwerer auslaugbar.

Neuere Holzschutzmittel auf Basis basischer Kupferverbindungen mit Unterstützung von Triazolen zeigen ein anderes Fixierungsverhalten. Es handelt sich jeweils um wässerige Lösungen, wobei die Triazole mit Hilfe von Lösemitteln und Emulgatoren zu in Wasser emulgierten Verbindungen zubereitet werden müssen. Unter Umständen werden auch quartäre Ammoniumverbindungen als Emulgatoren benutzt. Insbesondere solche, die auch eine biozide Wirksamkeit gegen holzzerstörende Pilze aufweisen.

Je nach Emulgator bzw. Emulgatorkombinationen bleiben sowohl die Triazole als auch die quartären Ammoniumverbindungen im Holz mobil. Auch Kupfer behält eine gewisse Mobilität und wird daher teilweise und nach und nach, insbesondere bei der Verwendung des Holzes im Erdreich, ausgewaschen.

Ein Problem, das es bei allen bisher bekannten Holzschutzmitteln zu lösen gilt, ist das Erreichen einer möglichst hohen Einbringtiefe mit einer möglichst niedrigen, aber ausreichenden Menge der vorgesehenen Wirkstoffe und ein Verhindern des Auswaschens dieser aktiven Komponenten über einen möglichst langen Zeitraum. Beide Faktoren sind nicht nur von wirtschaftlichem Interesse, sondern dienen auch dem Umweltschutz.

Gegenstand der vorliegenden Erfindung ist ein Konservierungsmittel für Holz, das neben einem oder mehreren an sich bekannten Wirkstoff(en) eine wirksame Menge wenigstens eines Fixierungshilfsmittels enthält, wobei das Fixierungshilfsmittel eine Phenoxyfettsäure, ein Phenoxyfettsäureester oder ein halogenierter Phenoxyfettsäureester ist.

Es hat sich überraschender Weise gezeigt, dass ein solches Konservierungsmittel für Holz in wässriger Lösung eine deutlich verringerte erforderliche Einbringmenge der Wirkstoffe im Vergleich zu bekannten Konservierungsmitteln bei gleicher Wirkungsaktivität zeigt. Ein Auswaschen wird deutlich verringert und über einen längeren Zeitraum verhindert.

Bevorzugte Ausführungsformen der vorliegenden Erfindung ergeben sich aus den Unteransprüchen.

So ist die Phenoxyfettsäure vorzugsweise ein Phenoxyfettsäureester, insbesondere ein halogenierter, insbesondere chlorierter Phenoxyfettsäureester. Mit letzterem lässt sich eine besonders gute und lang anhaltende Fixierung der Wirkstoffe nachweisen. Weitere Additive wie z.B. Parafine bzw. Öle können durch wasserabweisende Eigenschaften zusätzlich unterstützen.

Der Gehalt an der Phenoxyfettsäure in der Gesamtzusammensetzung liegt in vorteilhafter Weise zwischen nur 0,01 bis 10,0 insbesondere, zwischen 0,3 bis 1,0 Gew.%.

Die Wirkstoffe können im Rahmen der Erfindung beispielsweise aus der Gruppe der quaternären Ammoniumverbindungen, der metallischen Verbindungen, den metallionischen Verbindungen und/oder Triazolverbindungen ausgewählt sein. Auch andere Wirkstoffe können alleine oder in Kombination miteinander im Rahmen der Erfindung eingesetzt werden.

Die quaternären Ammoniumverbindungen ("Quats") sind vorzugsweise Benzalkoniumhalogenide, vorzugsweise aus der Gruppe der Benzalkoniumchloride, insbesondere bevorzugt aus der Gruppe der Benzyldimethylalkylammoniumchloride. Die Alkylgruppe umfasst vorzugsweise 8 bis 18 Kohlenstoffatome und ganz besonders bevorzugt 12 bis 14 Kohlenstoffatome.

Die metallische Verbindung kann eine Kupfer/Chrom/Arsen-Verbindung oder Kupfer/Chrom/Borverbindung sein.

Die metallionische Verbindung ist eine Kupferverbindung, die aus wasserlöslichen, basischen Kupferverbindungen, wie Kupfercarbonat, Kupferhydroxidcarbonat, Kupferhydroxid, Kupferborat und/oder Kupfersulfat bzw. Kupfersulfathydrat ausgewählt ist.

Darüber hinaus kann das erfindungsgemäße Konservierungsmittel zur Erweiterung seines Wirkungsspektrums weitere biozide, bakterizide und/oder fungizide Verbindungen enthalten. Insbesondere zu erwähnen sind in diesem Zusammenhang die fungizid wirkenden Triazolverbindungen, insbesondere
- Propiconazol:: 1-[2-(2,4-Dichlorphenyl)-4-propyl-1,3-dioxolan-2-ylmethyl]- 1 H-1,2,4-triazol,
- Tebuconazol:: 1-(4-Chlorphenyl)ethyl-4,4-dimethyl-3-1 H-1,2,4-triazol-1- ylmethyl)pentan-3-ol,
- Azaconazol:: 1-[2-(2,4-Dichlorphenyl)-1,3-dioxolan-2-ylmethyl]-1H-1,2,4- triazol,
- Fenbuconazol:: (RS)-4-(4-Chlorphenyl)-2-phenyl-2-(1H-1,2,4- triazol-1- ylmethyl)butyronitril,
- Myclobutanil:: 2-(4-Chlorphenyl)-2-(1 H-1,2,4-triazol-1- ylmethyl)hexannitril,
- Triadimenol:: 1-(4-Chlorphenoxy)-3,3-dimethyl-1-(1 H-1,2,4-triazol-1- ylmethyl)butan-2-ol.
- Cyproconazol:: α-(4-chlorophenyl)-α-(1-cyclopropylethyl)-1H-1,2,4-triazol- 1-ethanol

Bei den erfindungsgemäßen Zusammensetzungen reichen bereits geringe Mengen bezogen auf die Gesamtzusammensetzung an Triazolverbindungen zur Verbesserung des Wirkungsspektrums aus. Selbstverständlich können auch Gemische der vorgenannten Verbindungen eingesetzt werden.

Als weitere Komponente können die erfindungsgemäßen Konservierungsmittel Borverbindungen, wie beispielsweise Borsäure oder Polyborverbindungen enthalten.

Die erfindungsgemäßen Zusammensetzungen weisen eine gute Eindringtiefe bei verringerter Einbringmenge der wirksamen Komponenten auf. Sie zeigen eine verlängerte Wirkung im Einsatz gegen Bakterien und Pilze, insbesondere gegenüber Basidomyzeten und Moderfäule sowie andere erdbewohnende Mikroorganismen und Insekten im Freiland.

Das Kupfer wird deutlich geringer ausgewaschen als bei den bekannten Kupfer/Chrom/Borsalzen. Die Prüfung in Anlehnung an EN V 1250/2 ergab bei einer erfindungsgemäßen Zusammensetzung, welche den Phenoxyfettsäureester enthält, eine Auswaschung von eingebrachtem Kupfer von nur 1,6 %, im Gegensatz zu 4,3 % bei einem Kupfer/Chrom/Borsalz ohne Phenoxyfettäureester.

Viel deutlicher noch ist der Verbleib der Wirkstoffe im Holz gemäß EN 252, wenn die behandelten Holzstäbe über einen Zeitraum von bis zu 5 Jahren im Erdeingabeverfahren geprüft werden. Zur Ermittlung des Fixierungsgrades bzw. der verbleibenden Wirksamkeit gegen holzzerstörende Pilze und erdbewohnende Mikroorganismen wurde ein Teil der Stäbe jährlich ausgebaut und nach DIN 52186 das Biegeelastizitätsmodul EB II ermittelt. Eine Verminderung des bei Beginn der Untersuchung festgestellten Elastizitätsmoduls EB II um 75 % wurde als theoretischer Bruch gewertet. Die Ergebnisse sind in der nachfolgenden Tabelle dargestellt.

**Tabelle: Vergleichende Ergebnisse gemäß DIN 52168 nach 1 - 5 jährlicher Standdauer der Prüfstäbe im Freigelände.**

| ∅ Aufnahme kg/m³ bei 10 Prüfstäben | ∅ Ausgangsbiegeelastizitätsmodul EBII KN/mm² | verbleibender mittlerer Biege-³ elastizitätsmodul EB II KN/mm² in % nach | | | | | |
|---|---|---|---|---|---|---|---|
| Wirksubstanz | | 1 | 2 | 3 | 4 | 5 | Jahren |
| | | | | | | | |
| Triazol 0,088 | | | | | | | |
| | | | | | | | |
| Quats 0,55 | 7,04 | 90,9 | 84,9 | 73, 3 | 80,0 | 68,7 | |
| | | | | | | | |
| Phenoxy 0,037 | | 0 | 0 | 0 | 0 | 0 | theor. Bruch |
| | | | | | | | |
| Triazol 0,088 | | | | | | | |
| | 7,08 | 89,1 | 72,7 | 65, 9 | 64,2 | 54,2 | |
| | | | | | | | |
| Quats 0,55 | | 0 | 0 | 2 | 2 | 4 | theor. Bruch |

Die obige Tabelle zeigt Versuche für zwei verschiedene Kombinationen von Wirksubstanzen. Bei dem ersten Versuch ist die Kombination der Wirkstoffe Triazol, Quats und Phenoxy und im zweiten Versuch eine Kombination mit den Wirkstoffen Triazol und Quats untersucht worden. Die unterhalb den verbleibenden mittleren Biegeelastizitätsmodulen angegeben Zahlen betreffen die Anzahl der theoretisch gebrochenen Stäbe (von den 10 Prüfstäben).

Ein erfindungsgemäßes Holzschutzmittel weist beispielsweise eine der folgenden Zusammensetzungen auf:

| Beispiel 1: | |
|---|---|
| Benzalkoniumchlorid | 1 - 30% |
| Propiconazol | 0 - 3% |
| Kupferhydroxidcarbonat | 0 - 50% |
| Borsäure | 0 - 40% |
| Phenoxyfettsäureester | 0,01 - 10% |
| Wasser | ad 100% |

| | |
|---|---|
| Beispiel 2: | |
| Benzalkoniumchlorid | 4 - 6% |
| Propiconazol | 0,6 - 1% |
| Kupferhydroxidcarbonat | 10 - 30% |
| Borsäure | 5,0 - 20% |
| Phenoxyfettsäureester | 0,2 - 1% |
| Wasser | ad 100% |

| Beispiel 3: | |
|---|---|
| Benzalkoniumchlorid | 5,0% |
| Propiconazol | 0,8% |
| Kupferhydroxidcarbonat | 20,0% |
| Borsäure | 10,0% |
| Phenoxyfettsäureester | 0,5% |
| Wasser | ad 100% |

| Beispiel 4: | |
|---|---|
| Benzalkoniumchlorid | 5,00% |
| Kupferhydroxidcarbonat | 20,00% |
| Borsäure | 5,00% |
| Phenoxyfettsäureester | 0,50% |
| Alkalisches Lösemittel | 45,00 % |
| Wasser | ad 100% |

Alternativ zu den Beispielen 1 bis 3 sind auch Bespiele 1 a, 2a und 3a günstig, bei denen zusätzlich noch ein alkalisches Lösungsmittel, insbesondere Monoethanolamin bevorzugt mit einer Konzentration von 45%, denkbar aber auch in einer Konzentration zwischen 10% und 60%, insbesondere zwischen 30% bis 50%, bevorzugt zwischen 40% bis 50% vorhanden ist. Der Wasseranteil vermindert sich dann entsprechend.

Mit einer wie oben angegebenen Rezeptur wurden Holzspäne durch Kesseldrucktränkung imprägniert und die erzielte insektizide und fungizide Wirksamkeit über die Zeit untersucht. Im Vergleich zu herkömmlichen Produkten, beispielsweise mit einem hohen Benzalkoniumchloridanteil im Vergleich zur Metallverbindung, bleibt die insektizide Wirkung über einen Zeitraum von 2 Jahren weitgehend erhalten.

Im Schwammkellertest zeigt die erfindungsgemäße Rezeptur 2 Jahre nach Erdeinbau bei wenigen der behandelten Hölzer nach einer mittleren Schutzmittelaufnahme von 5,1 kg/m³ erste, sehr leichte Angriffe an der Holzoberfläche. Bei 8,1 kg/m³ und höheren Einbringmengen sind keine Angriffe feststellbar.

Im Ergebnis herrscht trotz einer verringerten Einbringmenge eine ausreichende Wirkstoffdichte im Versuchsholz vor.

## Patentansprüche

1. Konservierungsmittel für Holz, das neben einem oder mehreren an sich bekannten Wirkstoff(en) eine wirksame Menge wenigstens eines Fixierungshilfsmittel enthält,
**dadurch gekennzeichnet,**
**daß** das Fixierungshilfsmittel eine Phenoxyfettsäure oder ein Phenoxyfettsäureester oder ein halogenierter Phenoxyfettsäureester ist.

2. Konservierungsmittel nach Anspruch 1, **dadurch gekennzeichnet, dass** der Phenoxyfettsäureester ein halogenierter, insbesondere chlorierter Phenoxyfettsäureester ist.

3. Konservierungsmittel nach Anspruch 2, **dadurch gekennzeichnet, dass** die Phenoxyfettsäure oder der Phenoxyfettsäureester in der Gesamtzusammensetzung zu 0,01 bis 10,0 Gew.% enthalten ist.

4. Konservierungsmittel nach einem der Ansprüche 1 bis 3, **dadurch gekennzeichnet, dass** der/die Wirkstoff(e) aus der Gruppe ausgewählt ist/sind, bestehend aus quaternären Ammoniumverbindungen, metallischen Verbindungen, metallionischen Verbindungen und/oder Triazolverbindungen.

5. Konservierungsmittel nach Anspruch 4, **dadurch gekennzeichnet, dass** die quaternäre Ammoniumverbindung ein Benzalkoniumhalogenid ist.

6. Konservierungsmittel nach Anspruch 5, **dadurch gekennzeichnet, dass** das Benzalkoniumhalogenid ein Benzyldimethylalkylammoniumchlorid ist, wobei die Alkylgruppe solche umfasst, welche 8 bis 18 Kohlenstoffatome aufweist.

7. Konservierungsmittel nach Anspruch 4 bis 6, **dadurch gekennzeichnet, dass** die metallische Verbindung eine Kupfer/Chrom/Arsen-Verbindung oder Kupfer/Chrom/Bor-Verbindung ist.

8. Konservierungsmittel nach Anspruch 4 bis 6, **dadurch gekennzeichnet, dass** die metallionische Verbindung eine Kupferverbindung ist, ausgewählt aus Kupfercarbonat, Kupferhydroxidcarbonat, Kupferhydroxid, Kupferborat und/oder Kupfersulfat oder Kupfersulfathydrat.

9. Konservierungsmittel nach einem der Ansprüche 4 bis 8, **dadurch gekennzeichnet, dass** es des Weiteren eine oder mehrere Triazolverbindungen umfasst.

10. Konservierungsmittel nach Anspruch 9, **dadurch gekennzeichnet, dass** die Triazolverbindung aus
| | |
|---|---|
| Propiconazol: | 1-[2-(2,4-Dichlorphenyl)-4-propyl-1,3-dioxolan-2-ylmethyl]-1H-1,2,4-triazol, |
| Tebuconazol: | 1-(4-Chlorphenyl)ethyl-4,4-dimethyl-3-1H-1,2,4-triazol-1-ylmethyl)pentan-3-ol, |
| Azaconazol: | 1-[2-(2,4-Dichlorphenyl)-1,3-dioxolan-2-yl-methyl]-1H-1,2,4-triazol, |
| Fenbuconazol: | (RS)-4-(4-Chlorphenyl)-2-phenyl-2-(1H-1,2,4- triazol-1-ylmethyl)butyronitril, |
| Myclobutanil: | 2-(4-Chlorphenyl)-2-(1H-1,2,4-triazol-1-ylme-thyl)hexannitril, |
| Triadimenol: | 1-(4-Chlorphenoxy)-3,3-dimethyl-1-(1H-1,2,4-triazol-1-ylmethyl)butan-2-ol |
| Cyproconazol: | α-(4-chlorophenyl)-α-(1-cyclopropylethyl)-1H-1,2,4-triazol-1-ethanol |
| ausgewählt ist. | |

11. Konservierungsmittel für Holz mit folgender Zusammensetzung:
| | |
|---|---|
| Benzalkoniumchlorid | 1 - 30% |
| Propiconazol | 0 - 3% |
| Kupferhydroxidcarbonat | 0 - 50% |
| Borsäure | 0 - 40% |
| Phenoxyfettsäureester | 0,01 - 10% |
| Wasser | ad 100% |

12. Konservierungsmittel für Holz nach Anspruch 11, **dadurch gekennzeichnet, dass** als weiterer Bestandteil ein alkalisches Lösemittel
vorhanden ist.

## Claims

1. A preservative for wood which, in addition to one or more active ingredients known *per se,* also contains an effective amount of an auxiliary fixing agent, **characterised in that** the auxiliary fixing agent is a phenoxy fatty acid or a phenoxy fatty acid ester or a halogenated phenoxy fatty acid ester.

2. The preservative according to claim 1, **characterised in that** the phenoxy fatty acid ester is a halogenated, in particular a chlorinated phenoxy fatty acid ester.

3. The preservative according to claim 2, **characterised in that** the phenoxy fatty acid or the phenoxy fatty acid ester is contained in the overall composition an amount of 0.01 to 10.0 % by weight.

4. The preservative according to one of claims 1 to 3, **characterised in that** the active ingredient(s) is/are selected from the group consisting of quaternary ammonium compounds, metal compounds, metal ionic compounds and/or triazole compounds.

5. The preservative according to claim 4, **characterised in that** the quaternary ammonium compound is a benzalkonium halogenide.

6. The preservative according to claim 5, **characterised in that** the benzalkonium halogenide is a benzyldimethylalkylammonium chloride, the alkyl group having 8 to 18 carbon atoms.

7. The preservative according to claims 4 to 6, **characterised in that** the metal compound is a copper/chromium/arsenic compound or a copper/chromium/boron compound.

8. The preservative according to claims 4 to 6, **characterised in that** the metal ionic compound is a copper compound selected from copper carbonate, copper hydroxide carbonate, copper hydroxide, copper borate and/or copper sulphate or copper sulphate hydrate.

9. The preservative according to one of claims 4 to 8, **characterised in that** it also comprises one or more triazole compounds.

10. The preservative according to claim 9, **characterised in that** the triazole compound is selected from
| | |
|---|---|
| propiconazole: | 1-[2-(2,4-dichlorophenyl)-4-propyl-1,3-dioxolan-2-ylmethyl]-1H-1,2,4-trizole, |
| tebuconazole: | 1-(4-chlorophenyl)ethyl-4,4-dimethyl-3-1H-1,2,4-triazol-1-ylmethyl)pentan-3-ol, |
| azaconazole: | 1-[2-(2,4-dichlorophenyl)-1,3-dioxolan-2-yl-methyl]-1H-1,2,4-triazole, |
| fenbuconazole: | (RS)-4-(4-chlorophenyl)-2-phenyl-2-(1H-1,2,4-trizol-1-ylmethyl)butyronitrile, |
| myclobutanil: | 2-(4-chlorophenyl)-2-(1H-1,2,4-triazol-1-ylmethyl)hexanenitrile, |
| triadimenol: | 1-(4-chlorophenoxy)-3,3-dimethyl-1-(1H-1,2,4-trizol-1-ylmethyl)butan-2-ol |
| cyproconazole: | a-(4-chlorophenyl)-a-(l-cyclopropylethyl)-1H-1,2,4-trizole-1-ethanol. |

11. A preservative for wood having the following composition:
| | |
|---|---|
| benzalkonium chloride | 1 to 30 % |
| propiconazole | 0 to 3 % |
| copper hydroxide carbonate | 0 to 50 % |
| boric acid | 0 to 40 % |
| phenoxy fatty acid ester | 0.01 to 10 % |
| water | to 100 %. |

12. The preservative for wood according to claim 11, **characterised in that** an alkali solvent is provided as a further constituent.

## Revendications

1. Produit de conservation pour le bois, qui hormis une ou plusieurs matière (s) actives (es) connue(s) en soi contient une quantité efficace d'au moins un agent auxiliaire de fixation, **caractérisé en ce que** l'agent auxiliaire de fixation est un acide gras phenoxy ou un ester d'acide gras phenoxy ou un ester d'acide gras phenoxy halogéné.

2. Produit de conservation selon la revendication 1, **caractérisé en ce que** l'ester d'acide gras phenoxy est un ester d'acide gras phenoxy halogéné, notamment chloré.

3. Produit de conservation selon la revendication 2, **caractérisé en ce que** l'acide gras phenoxy ou l'ester d'acide gras phenoxy est contenu à raison de 0,01 à 10,0 % en poids dans la composition totale.

4. Produit de conservation selon l'une quelconque des revendications 1 à 3, **caractérisé en ce que** la/les matière(s) active(s) est/sont choisie(s) dans le groupe constitué des composés d'ammonium quaternaire, des composés métalliques, des composés ioniques métalliques et/ou des composés triazoliques.

5. Produit de conservation selon la revendication 4, **caractérisé en ce que** le composé d'ammonium quaternaire est un halogénure de benzalkonium.

6. Produit de conservation selon la revendication 5, **caractérisé en ce que** l'halogénure de benzalkonium est un chlorure de benzyldiméthylammonium, le groupe alkyle en comprenant de tels comportant de 8 à 18 atomes de carbone.

7. Produit de conservation selon la revendication 4 à 6, **caractérisé en ce que** le composé métallique est un composé de cuivre/chrome/arsenic ou un composé de cuivre/chrome/bore.

8. Produit de conservation selon la revendication 4 à 6, **caractérisé en ce que** le composé métallique ionique est un composé de cuivre, choisi parmi le carbonate de cuivre, l'hydroxicarbonate de cuivre, l'hydroxyde de cuivre, le borate de cuivre et/ou le sulfate de cuivre et le sulfate de cuivre hydraté.

9. Produit de conservation selon l'une quelconque des revendications 4 à 8, **caractérisé en ce qu'**il comprend par ailleurs un ou plusieurs composés triazoliques.

10. Produit de conservation selon la revendication 9, **caractérisé en ce que** le composé triazolique est choisi parmi
le propiconazole : 1-[2-(2,4-dichlorophényle)-4-propyle-1,3-dioxolane-2-ylméthyle]1 H-11,2,4-triazole, le tébuconazole : 1-(4-chlorophényle)éthyle-4,4-diméthyle-3-1 H-1,2,4-triazole-1 - ylméthyle)pentane-3-ole,
l'azaconazole :1-[2-(2,4-dichlorophényle)-1,3-dioxolane-2-yl-méthyle]-1 H1,2,4-triazole,
le fenbuconazole : (RS)-4-(4-chlorophényle)-2-phényle-2-(1 H-1,2,4- triazole-1-ylméthyle)butyronitrile,
le myclobutanile : 2-(4-chlorophényle)-2-(1 H-1,2,4-triazole-1-ylméthyle)hexan-nitrile,
Le triadiménole : 1-(4-chlorophénoxy)-3,3-diméthyle-1-(1 H-1,2,4-triazole-1- ylméthyle) buta n-2-ole Le cyproconazole : α-(4-chlorophényle)-o-(1-cyclopropyléthyle)-1H-1,2,4-triazole-1-éthanol.

11. Produit de conservation pour le bois, présentant la composition suivante :
| | |
|---|---|
| Chlorure de benzalkonium | 1-30% |
| Propiconazole : | 0-3% |
| Hydroxyde de carbonate de cuivre | 0-50% |
| Acide borique | 0-40% |
| Ester d'acide gras phenoxy | 0,01-10% |
| Eau | ad 100% |

12. Produit de conservation pour le bois selon la revendication 11, **caractérisé en ce qu'**en tant que composant supplémentaire, un solvant alcalin est présent.
